# EUROPÄISCHE PATENTSCHRIFT

(11) **EP 2 375 888 B1**
(45) Veröffentlichungstag und Bekanntmachung des Hinweises auf die Patenterteilung: **20.02.2013**
(21) Anmeldenummer: 09795983.7
(22) Anmeldetag: 18.12.2009
(51) Int. Cl.: A01J 25/00, A01J 25/11, A23C 19/00, A01J 27/00

(54) **FILTER ZUM EINSATZ IN DER LEBENSMITTELVERARBEITUNG**
FILTER FOR USE IN FOOD PROCESSING
FILTRE DESTINÉ À ÊTRE UTILISÉ DANS LE TRAITEMENT DE PRODUITS ALIMENTAIRES

(30) Priorität: 19.12.2008 DE 102008063972
(43) Veröffentlichungstag der Anmeldung: 19.10.2011
(60) Teilanmeldung: 12197492.7
(73) Patentinhaber: Hochland SE, 88178 Heimenkirch (DE)
(72) Erfinder: PRINZ, Artur, 88178 Heimenkirch (DE); KNAPP, Florian, 88167 Röthenbach (DE)
(74) Vertreter: Braun-Dullaeus, Karl-Ulrich
(86) Internationale Anmeldenummer: PCT/EP2009/067563
(87) Internationale Veröffentlichungsnummer: WO 2010/070112

(56) Entgegenhaltungen:
- AU-B2- 744 993
- FR-A1- 2 747 266
- US-A- 3 691 633

## Beschreibung

Die vorliegende Erfindung betrifft ein Filter zum Einsatz bei der Verarbeitung pumpfähiger pastöser Lebensmittel, insbesondere zum Einsatz in der Schmelzkäseherstellung, aufweisend ein geschlossenes Gehäuse mit einem Zulauf für das zu filtrierende Produkt, einem Ablauf für das filtrierte Produkt, einen Ausgang für den abgefilterten Rückstand und einen zwischen Zulauf und Ablauf angeordneten Filtereinsatz mit einer zylindrischen Filterwand, die in radialer Richtung von Innen ("Primärseite") nach Außen ("Sekundärseite") von dem Produkt durchströmt wird. Die Erfindung betrifft auch einen besonderen Einsatz eines solchen Filters.

Derartige Filter können an unterschiedlichen Stellen im Verarbeitungsprozess eingesetzt werden. Zum einen dienen sie als im Prozess kontinuierlich durchflossener "in-line" Filter dazu, das fließende Produkt zu filtern, um eventuelle Verunreinigungen vor der Weiterverarbeitung zu entfernen. Zum anderen werden derartige Filter als "Rework"-Filter betrieben, die Bestandteile, insbesondere veränderte Produktablagerungen oder Zutaten, aus nicht verarbeitetem Produkt entfernen, um das solchermaßen gereinigte Produkt einer Wiederverwendung zuzuführen.

Für diese Trennaufgaben werden üblicherweise Filter verwendet, deren Maschenweiten so bemessen sind, dass das viskose Produkt, insbesondere der erhitzte Schmelzkäse, durch den Filter hindurchtreten kann, während die Schmutzfracht als Rückstand zurückgehalten wird. Dabei sind Systeme bekannt, bei denen die Schmutzfracht aufgrund der Schwerkraft nach unten sinkt und ausgeschleust wird. Bei diesem Ausschleusvorgang wird allerdings mit dem Rückstand auch ein recht großer Anteil von gutem Produkt ausgeschleust. Ein weiteres Problem liegt darin, dass sich an den Wandungen des Filters und dem Gehäuse angebrannte Reste festsetzen, die zu Produktänderungen, z.B. Verfärbungen führen.

Bekanntermaßen sind Lebensmittel, wie z.B. Schmelzkäse, wegen ihrer hohen Viskosität ein bezüglich der Filterung besonders sensibles Produkt. Hinzu kommt die hohe Verarbeitungstemperatur zwischen 50°C und 90°C, bei der es leicht zu dem oben genannten Anhaften und zu Produktänderungen, wie z.B. Farb- oder Geschmacksänderungen wegen Denaturierung kommen kann. Vor allem wegen des schnellen Zusetzens haben bekannte Filtersysteme eine geringe Standzeit. Danach müssen die Filter gewechselt oder zwischengereinigt werden, wobei die Zwischenreinigung durch ein Rückspülen mittels einer geeigneten Spülflüssigkeit erfolgt. Während des Rückspülens und des Ausbaus ist der Filter nicht in Betrieb, so dass nachfolgend das gesamte System wieder angefahren werden muss.

Die FR 2 747 266 offenbart eine Vorrichtung für die Produktion von Schmelzkäse. Diese umfasst einen länglichen Filter, der dazu geeignet ist, die wässrigen Bestandteile bei der Käsezubereitung abzutrennen.

Die AU 744 993 B2 offenbart eine Lebensmittel-Mischmaschine. Innerhalb eines Gehäuses sind mehrere Förderbänder zum Fördern des Lebensmittels angeordnet. Entlang den Förderbändern sind Mischeinrichtungen vorgesehen, die das Lebensmittelmaterial vermischen, ohne es zu beschädigen.

Die US 3 691 633 A offenbart eine Vorrichtung zum Entmolken von Käsebruch. Um für das Ausgangsprodukt einen niedrigen Feuchtigkeitsgehalt zu erzielen weist die Vorrichtung ein Pressplattenpaar und mehrere dazwischen befindliche Filtersäcke auf.

Aufgabe der vorliegenden Erfindung ist es, ein gattungsgemäßes Filter derart weiterzubilden, dass bei hohen Standzeiten, bei hohem Durchsatz und bei großer Filterwirkung Rückstände aus dem kontinuierlich zu verarbeitenden Produkt effektiv und mit möglichst wenig Verlust ausgeschleust werden können, wobei die Bildung von Produktänderungen weitgehend vermieden wird.

Erfindungsgemäß wird diese Aufgabe durch einen Filter mit den Merkmalen des Anspruchs 1 gelöst. Merkmale besonderer Ausführungsformen sind in den Unteransprüchen genannt.

Ein wesentliches Merkmal des erfindungsgemäßen Filters liegt in der besonderen Ausbildung des Kernelementes, das innerhalb des Filtereinsatzes koaxial angeordnet und drehbar gelagert ist, wobei es vorteilhafterweise vermittels eines Antriebes angetrieben wird. Dabei richtet sich die Gestaltung des Kernelementes nach den Anforderungen an den Ringraum, der sich zwischen dem Kernelement und der das Kernelement umgebenden Filterwand ausbildet. Dieser definierte Ringraum muss besonderen Anforderungen genügen, die sich aus den Besonderheiten des zu filternden Produktes ergeben. Zum einen muss der entstehende Ringraum einen konstant homogenen Fluss des Produktes ermöglichen, so dass sich keine Zonen bilden können, in denen sich Produkt sammeln und denaturieren kann. Zum anderen ist es im Hinblick auf das sensible Produkt wichtig, dass es beim Durchströmen des Filters zu einem kontrollierbaren und möglichst homogenen Druckgradienten kommt, der einen bestimmten Wert zwischen 4 bar und 8 bar nicht übersteigt.

Ein weiterer erfindungswesentlicher Gedanke ist, dass am Außenumfang des Kernelementes ein Schaber insbesondere mit mehreren separaten Schaberlamellen angeordnet ist, der bei sich drehendem Kernelement das Produkt schonend von der Innenfläche der Filterwand schabt, um den sich an dieser Primärseite absetzenden Rückstand abzulösen und zum Ausgang zu befördern. Dabei ist es auch ein wesentlicher Gesichtspunkt, dass der erfindungsgemäße Schaber so konzipiert ist, dass er den homogenen Fluss des Produktes nicht behindert. Dazu ist er vorteilhafterweise nicht ähnlich einer Förderschnecke mit einem kontinuierlichen, das Kernelement in einer Spirale umgebenden Schaberelement ausgestattet, sondern weist große den freien Durchfluss gewährleistende Unterbrechungen auf. Zudem wird die Drehgeschwindigkeit so angepasst, dass es am Schaberelement zu möglichst geringen Druckschwankungen im Fluss des Produktes kommt.

Der erfindungsgemäße Filter weist dabei ein geschlossenes Gehäuse mit einem Zulauf für das zu filtrierende Produkt, mit einem Ablauf für das filtrierte Produkt und mit einem Ausgang für den abgefilterten Rückstand auf. Die Filterfunktion wird von dem zylindrischen Filtereinsatz übernommen. Erfindungsgemäß ist in den Filtereinsatz das Kernelement derart eingesetzt, dass zwischen Kernelement und Filtereinsatz der definierte Ringraum ausgebildet ist, der bei dem zu verarbeitenden Produkt trotz unterschiedlichen Viskositäten eine hohe und homogene Fließgeschwindigkeit gewährleistet. Im Falle des zu verarbeitenden Schmelzkäses hat dieser eine Temperatur zwischen etwa 50°C und 90°C und eine entsprechende Viskosität. Diese liegt in diesem Temperaturbereich etwa zwischen 0,25 - 5,0 Pa*s, wobei statt der Einheit Pa*s auch die Einheit cP ("centipoise") verwendet wird. Dabei kann die Viskosität des Schmelzkäses in vielen Fällen mit einem Rotationsviskosimeter mit einem zylindrischen Messsystem entsprechend DIN 53018/53019 gemessen werden.

Aufgrund der hohen Fließgeschwindigkeit wird die Schmutzfracht sicher in Richtung des Ausschleusventils am Ausgang transportiert. Wie schon dargestellt, ist der Ringraum dabei so ausgebildet, dass keine strömungsberuhigten Zonen entstehen und Produktänderungen vermieden werden können. Bei der Fließgeschwindigkeit, die zu einem Durchsatz von mehr als 500 Kilogramm und bis zu 4 Tonnen pro Stunde führen kann, wird ein gutes Trennergebnis erreicht, so dass sich nahe des Ablaufs für den abgefilterten Rückstand der Rückstand in hoher Konzentration ansammelt. Hierdurch können die Verluste an gutem Produkt beim Abschlämmen, das heißt beim Auslassen des abgefilterten Rückstands aus dem Ablauf, wesentlich reduziert werden.

Ein ganz wesentlicher Aspekt der Erfindung liegt in der Gestaltung und insbesondere in der Herstellung des Filtereinsatzes und insbesondere der aktiven Filterwand. Diese kann je nach Produkt und Einsatzgebiet Filteröffnungen mit einer Maschenweite zwischen 10 und 400 Mikrometern aufweisen. Ein besonderer Gesichtspunkt ist dabei die von den Öffnungen gebildete Gesamtfläche, die zu einem homogenen Fluss des Produktes durch den Filter beiträgt. Diesbezüglich hat es sich als besonders vorteilhaft erwiesen, wenn die von den Öffnungen gebildete Gesamtfläche der 1,5 fachen bis 2,5 fachen, insbesondere etwa der doppelten, Querschnittsfläche des Zulaufs entspricht. Solcherart ausgebildete Filtereinsätze zeichnen sich durch einen gleichmäßigen Durchtritt des Produktes durch alle zur Verfügung stehenden Öffnungen und damit durch eine gute Siebwirkung aus.

Ein besonders wesentlicher Erfindungsgedanke liegt in der nahtlosen Filterwand. So wurden solche Filter bislang immer von einem zum Zylinder gebogenen Lochblech oder einem Geflecht gebildet. Ein solcher Zylinder hat jedoch immer einen erhabenen Stoß, an dem die Kanten aufeinander treffen. Dieser Stoß steht einem sauberen Absteifen der Innenfläche offensichtlich entgegen und trägt zu einem großen Verschleiß der Schaber bei. Erfindungsgemäß wird die Innenfläche der Filterwand mit einem spanabhebenden Verfahren bearbeitet, insbesondere wird die zylindrische Filterwand aus einem Vollmaterial, beispielsweise einem dickwandigen Zylinder, ausgedreht. Die Bearbeitung der äußeren Filterfläche geschieht vorteilhafterweise auf dieselbe Art. Das die Filterfläche ausbildende Sieb kann dann eine Stärke von weniger als einem Millimeter, insbesondere zwischen 0,5 mm und 1,5 mm, aufweisen. Eine solche durch Aus- oder Abdrehen bearbeitete Fläche ist besonders glatt und kann problemlos mit Schabern gereinigt werden.

Die Öffnungen werden nachträglich durch einen Bohrprozess, insbesondere durch einen mechanischen Bohrer oder durch einen Laserstrahl, in die Filterwand eingebracht. Dabei kann mit einem Laserstrahl eine höhere Lochdichte erzielt werden. Dabei ist es vorteilhaft, wenn die Bohrungen definierte Strömungskanäle bilden, die in Fließrichtung des Produktes konisch erweitert sind.

Um den Filtereinsatz im Bereich der Filterfläche zu verstärken, ist es vorteilhaft, wenn der Außenumfang von beabstandeten Stützringen umgeben ist. Diese können beim Herstellungsprozess aus dem Vollmaterial entstehen. Es kann auch vorteilhaft sein, die Stützringe nachträglich durch Schweißen oder Löten anzubringen.

Das vorzugsweise aus Kunststoff bestehende Kernelement im Inneren des zylindrischen Filtereinsatzes kann mit dem Antrieb in Rotationsbewegung versetzt werden. Dieser ist vorzugsweise so ausgebildet, dass das Kernelement mit einer Drehzahl zwischen 1 U/min und 30 U/min vor- und rückwärts, intermittierend angetrieben wird, wobei die Drehzahl in Abhängigkeit einer Druckdifferenz, insbesondere der Druckdifferenz zwischen Zulauf und Ablauf, einstellbar ist oder sich selber regelt. Je höher der Differenzdruck, desto größer die Rotationsgeschwindigkeit.

In einer vorteilhaften Ausgestaltung der Erfindung sind an dem drehbaren Kernelement, das vorzugsweise von einem aus Kunststoff gefertigten Zylinder beispielsweise in Form eines Tunnels, eines Fasses oder eines Kegels gebildet wird, Schabedamellen angeordnet, die mit einer schabenden Außenkante entlang der Innenwand des Filtereinsatzes schaben. Aufgrund des Abschabens der Filteroberfläche wird ein niedriger Differenzdruck beim Durchgang durch den Filter erreicht. Dadurch, dass die Filteroberfläche kontinuierlich gereinigt wird, entstehen lediglich geringe Differenzdruckschwankungen, so dass ein besonders guter Transport des Produktes entlang der inneren Filteroberfläche gewährleistet ist. Die einzelnen Schaberlamellen sind versetzt zueinander so angeordnet, dass bei Rotation die gesamte Innenwand des Filtereinsatzes überstrichen wird.

In einer besonderen Ausführungsform sind die Schaberlamellen in einem Winkel gegen die Umfangsrichtung in der Wandung gehalten, so dass sie sich bei Rotation im Fluss des Produktes bewegen. Die Lagerung der Schabedamellen in dem Kernelement aus Kunststoff, insbesondere PVDF, kann schwimmend sein, so dass sich die Schaberlamellen ein wenig entlang ihrer Achse bewegen können. Bei der Materialpaarung ist darauf zu achten, dass diese ein Gleiten unterstützt. Diese schwimmende Halterung wird vorzugsweise dadurch realisiert, dass die aus flachem Kunststoff gefertigte Schaberlamelle mindestens eine konvexe Krümmung aufweist, mit der sie derart in einen entsprechend konkaven Schlitz eingesteckt ist, dass sie um ein Stückchen in dem Schlitz hin und her rutschen kann. Die andere Kante (,Schaberkante") der Schaberlamelle weist ebenfalls eine konvexe Krümmung auf, die der Krümmung der Innenfläche der Filterwand unter Berücksichtigung des winkeligen Einbaus der Schaberlamelle angepasst ist. Idealerweise sind beide konvexen Krümmungen identisch, so dass ein einfacher Einbau sichergestellt ist. Durch die schwimmende Halterung legen sich die Schaberkanten optimal an die Innenfläche der Filterwand an.

In einer bevorzugten Ausführungsform ist in dem Kernelement ein zentraler Spülkanal zur Durchführung von Spülflüssigkeit vorgesehen. Dieser hat abzweigende Ausflusskanäle, die jeweils in einem Schlitz münden, in dem eine Schaberlamelle eingesteckt ist. Die Schaberlamelle wird quasi von hinten abgeströmt. Um den Querschnitt der Ausflusskanäle und damit die Spülleistung zu erhöhen, ist es vorteilhaft, wenn die Ausflusskanäle einen rechteckigen Querschnitt haben, dessen Breite der Breite des Schlitzes entspricht. Die Ausflusskanäle können in Flussrichtung konisch erweitert sein. Zum Reinigen rotiert das Kernelement ein Stück zurück und wieder vor, während die Spülflüssigkeit durch die Ausflusskanäle in den Ringraum strömt. Auf diese Weise wird die gleichzeitig abgeschabte Primärseite der Filterwand effektiv von Verunreinigungen befreit. Vorzugsweise ist eine Steuerung vorhanden, über die der Rückspülvorgang über eine vorbestimmte Zeit durchführbar ist. Mit den Ausflusskanälen wird ein Zuwachsen des Ringraumes und der Lammelenschaber vermieden.

Schließlich ist am Ablauf für den abgefilterten Rückstand vorzugsweise ein steuerbares Verschlusselement angeordnet, durch das bei entsprechender Steuerung der abzufilternde Rückstand gezielt ausgeschoben werden kann.

Weitere Merkmale, Einzelheiten und Vorteile der Erfindung ergeben sich aus den in der Zeichnung dargestellten Ausführungsbeispielen. Es zeigen:
- Figur 1:: eine Schnittdarstellung des erfindungsgemäßen Filters und
- Figur 2:: eine Schnittdarstellung mit angedeuteten Schaberlamellen.

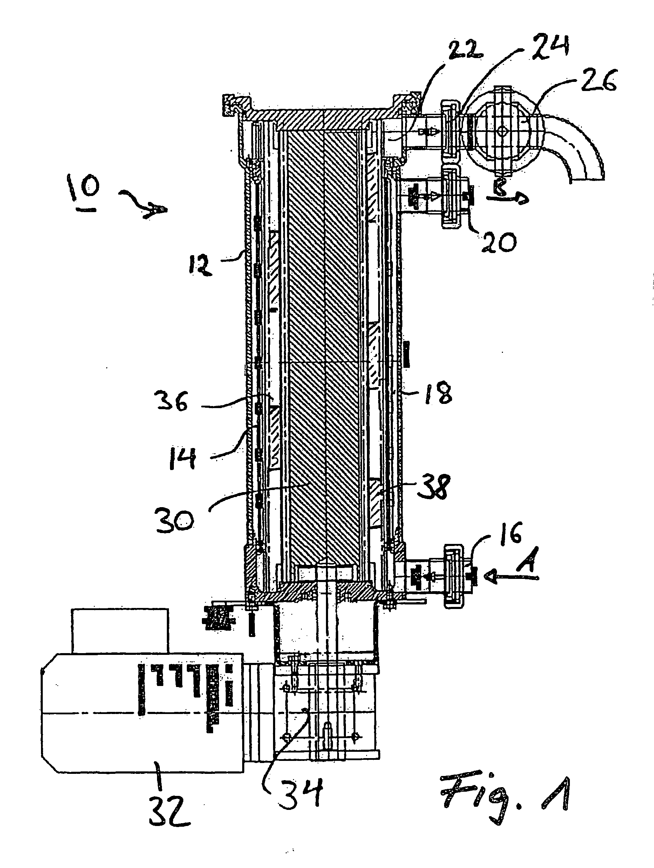

In Figur 1 ist ein Längsschnitt durch einen Filter 10 gezeigt, der sich insbesondere in der Schmelzkäseherstellung einsetzen lässt und der in einem geschlossenen Gehäuse 12 einen herausnehmbaren Filtereinsatz 14 aufweist. In das Gehäuse 12 führt ein Zulauf 16 (Pfeil A), über welchen in hier nicht näher dargestellter Art und Weise das hochviskose Produkt über eine Rohrleitung zugeführt wird. Das Produkt wird in das Innere des Filters 10 geführt und durchtritt die mit Öffnungen versehene Filterwand des zylindrischen Filtereinsatzes 14 von innen nach außen in radialer Richtung. Außen ist zwischen dem Filtereinsatz 14 und dem geschlossenen Gehäuse 12 ein Mantelraum 18 vorgesehen, durch den das gefilterte Produkt durch die Druckdifferenz in Richtung eines Ablaufs 20 nach oben gefördert wird. An den Ablauf 20 schließt eine hier nicht näher dargestellte Rohrleitung an, über die das gefilterte Produkt zur Weiterverarbeitung zugeführt wird (Pfeil B).

Abgefilterter Rückstand in Form von Ablagerungen und Fremdkörpern werden aufgrund der geringen Spalt- oder Maschenweite in der Filterwand des Filtereinsatzes mechanisch zurückgehalten und gelangen nicht in den Mantelraum 18. Dieser Rückstand wird mittels Schaberlamellen 38 nach oben in Richtung eines Sammelbereichs 22 gefördert. Über einen entsprechenden Ausgang 24 wird der angesammelte Rückstand durch Öffnen eines Steuerelements 26, das zu definierten Zeitpunkten abgeleitet wird.

Im Filtereinsatz 14 ist ein drehbares aus Kunststoff gefertigtes Kernelement 30 koaxial angeordnet, das über einen Motor 32 und ein Getriebe 34 in Drehung versetzbar ist. Zwischen dem rotierenden Kernelement 30 und dem Filtereinsatz 14 ist ein definierter Ringraum 36 ausgebildet. Am rotierenden Kernelement 30 sind die Schabedamellen 38 aus Kunststoff gehalten, die so bemessen sind, dass sie den gesamten Ringraum 36 überbücken an der Fifterwand anliegen. Bei drehendem Kernelement zum 30 schaben die Schaberlamellen 38 den Rückstand an der Innenfläche der Filterwand ab und führen ihn zum Sammelbereich 22. Das Kernelement 30 ist so dimensioniert, dass der entstehende Ringraum 36 einen konstanten Fluss des Produktes ermöglicht.

Das Kernelement 30 kann nun mit seinen Schaberlamellen 38 einen definierten Anpressdruck auf die Primärseite des Filterelements 14 ausüben. Die Drehzahl und Drehrichtung des Kernelementes 30 ist über die hier nicht näher dargestellte Steuerung variabel einstellbar und stellt sich je nach Produktionsbedingungen, insbesondere bei steigender Druckdifferenz zwischen Eingang 16 und Ausgang 20 automatisch über ein geeignetes Programm ein.

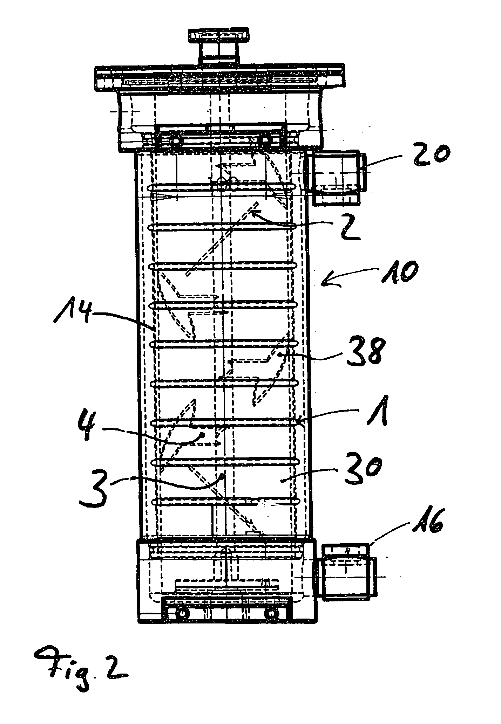

In Figur 2 ist ein Filter 10 mit eingebautem Filtereinsatz 14 dargestellt, der auch liegend betreibbar ist. Zur erkennen ist, dass die dünne Filterwand von den Umfang umfassenden Stützringen 1 stabilisiert wird. Der Filtereinsatz 14 ist aus einem Stück gedreht und nachträglich mit den Öffnungen versehen. Aus Figur 2 ist zu entnehmen, dass das Kernelement 30 ein massiver aus Kunststoff gefertigter Zylinder ist, in dessen Wandung Schlitze 2 in einem Winkel zur Umfangsrichtung von etwa 45° eingebracht sind. In den Schlitzen 2 sind die Schaberlamellen 38, die mit ihrer schabenden Außenkante die Innenwand des Filtereinsatzes 14 beaufschlagen, schwimmend eingesteckt. Die Schaberlamellen 38 sind so gebildet, dass sie in dem jeweiligen Schlitz 2 hin und her bewegen können.

In dem Kernelement 30 ist ein Spülkanal 3 zur Durchführung von Spülflüssigkeit vorgesehen. Von dem Spülkanal 3 zweigen in radialer Richtung Ausflusskanäle 4 ab, die jeweils in einem Schlitz 2 münden. Die Ausflusskanäle 4 haben einen rechteckigen Querschnitt, der in seiner Breite der Breite des Schlitzes 2 entspricht. In einer Reinigungsphase wird der Produktfluss durch den Filter gestoppt und Spülflüssigkeit über die Kanäle in die Schlitze eingebracht. Unter einer Hin- und Herbewegung des Kernelementes 30 werden die schwimmend eingesteckten Schaberlamellen gelöst und die Filterwand durch Abschaben gereinigt. Die anfallende mit Rückständen belastete Spülflüssigkeit wird über einen nicht dargestellten Abfluss abgeführt.

Zusammengefasst wird das Produkt in der Produktionsphase von der Schmelzmaschine über eine Rohrleitung zum Filter gepumpt und fließt über den Einlaufstutzen in das Gehäuse. Das Produkt fließt in Ringraum zwischen Schaberkem und Filterelement (Primärseite) und durchstömt das Filterelement von der Primärseite zum Mantelraum ("Sekundärseite°). Dabei werden Ablagerungen und Fremdkörper durch das Filterelement auf der Primärseite zurückgehalten. Das gefilterte Produkt wird durch den Auslaufstutzen rausgebracht.

Für das Abschlammen des Fifterelementes wird das Steuerelement zu einem definierten Zeitpunkten geöffnet. Das mit Rückständen stark belastete Produkt strömt aufgrund der Druckdifferenz zwischen Primärseite und Atmosphäre über den Abschlammstutzen raus.

Mit dem beschriebenen Filter und der Möglichkeit der Reinigung im Betrieb kann zum einen der Verlust von "gutem" Produkt beim Abschlammen minimiert werden. Die Standzeiten während der Produktion können durch die Möglichkeit der Reinigung wesentlich erhöht werden, wobei große Standzeiten in der Produktion verwirklicht werden können, bevor das Filterelement 14 nach Ausbau einer externen Reinigung zugeführt werden muss.

## Patentansprüche

1. Filter zum Einsatz in der Verarbeitung pastöser Lebensmittel, insbesondere in der Schmelzkäseherstellung, aufweisend ein geschlossenes Gehäuse (12) mit einem Zulauf (16) für zu filtrierende Produkt, einem Ablauf (20) für das filtrierte Produkt, einen Ausgang für den abgefilterten Rückstand und einen zwischen Zulauf (16) und Ablauf (20) angeordneten Filtereinsatz (14) mit zylindrischer Filterwand, die in radialer Richtung von Innen nach Außen von dem Produkt durchströmt wird,
**gekennzeichnet durch**
ein drehbares Kernelement (30), das im Filtereinsatz (14) koaxial angeordnet ist, wobei zwischen dem Kernelement (14) und der Filterwand ein definierter Ringraum (36) ausgebildet ist, wobei das Kernelement (30) so dimensioniert ist, dass der entstehende Ringraum (36) einen konstanten Fluss des Produktes ermöglicht, wobei am Außenumfang des Kernelementes (30) mindestens ein Schaber (38) angeordnet ist, der bei drehendem Kernelement (30) zum Abführen des Rückstandes an der Innenfläche der Filterwand schabt.

2. Filter nach Anspruch 1,
**dadurch gekennzeichnet , dass** der Filtereinsatz (14) Öffnungen mit einer Maschenweite zwischen 10 und 400 Mikrometern aufweist, wobei die von den Öffnungen gebildete Gesamtfläche dem 1,5 fachen bis 2,5 fachen, insbesondere etwa dem doppelten, Querschnitt des Zulaufs entspricht.

3. Filter nach Anspruch 1 oder 2,
**dadurch gekennzeichnet, dass** die Innenfläche der Filterwand mit einem spanabhebenden Verfahren bearbeitet und daher nahtlos ist, wobei die Öffnungen durch einen Bohrprozess, insbesondere mechanisch oder mit Laserstrahlung, in die Filterwand eingebracht sind.

4. Filter nach Anspruch 1,
**dadurch gekennzeichnet , dass** das Kernelement (30) mit einem Antrieb ausgestattet ist, der ein Drehen des Kernelementes in Vorwärts- und Rückwärtsrichtung ermöglicht, wobei die Drehzahl in Abhängigkeit einer Druckdifferenz, insbesondere der Druckdifferenz zwischen Zulauf (16) und Ablauf (20), einstellbar ist.

5. Filter nach einem der vorherigen Ansprüche,
**dadurch gekennzeichnet**, dassdasKernelement(30)von einem vorzugsweise aus Kunststoff gefertigten Zylinder gebildet ist, dessen Wandung Schaberlamellen (38) trägt, wobei die Schaberlamellen (38) mit einer schabenden Außenkante die Innenwand beaufschlagen.

6. Filter nach Anspruch 5,
**dadurch gekennzeichnet, dass** die Schaberlamellen (38) im Winkel gegen die Umfangsrichtung in der Wandung gehalten sind, wobei die Schabedamellen (38) zur Halterung in einem in die Wandung eingebrachten Schlitz (2) schwimmend gehalten sind.

7. Filter nach Anspruch 6,
**dadurch gekennzeichnet , dass** in dem Kernelement (30) ein Spülkanal (3) zur Durchführung von Spülflüssigkeit vorgesehen ist, wobei der Spülkanal (3) abzweigende Ausflusskanäle (4) aufweist, die jeweils in dem Schlitz (2) münden.

8. Filter nach Anspruch 7,
**dadurch gekennzeichnet, dass** die Ausflusskanäle (4) einen rechteckigen Querschnitt haben, der in seiner Breite der Breite des Schlitzes (2) entspricht.

9. Verwendung des Filters nach einem der vorherigen Ansprüche als Rework-Filter, der dem Produkt zugegebene körnige Zutaten als Rückstand zurück hält und damit das Produkt wiederverwendbar macht.

## Claims

1. Filter for be used in the processing of pasty food, in particular in the production of processed cheese, comprising a closed housing (12) with an inlet (16) for product to be filtered, an outlet (20) for the filtered product, an exit for the filtered out residue and a filter element (14) arranged between the inlet (16) and the outlet (20) with a cylindrical filter wall, which is flowed through by the product in a radial direction from inside outwards,
**characterised by**
a rotatable core element (30), arranged coaxial within the filter element (14), wherein a defined annular space (36) is formed between the core element (14) and the filter wall, wherein the core element (30) is so dimensioned, that the emerging annular space (36) allows constant flow of the product, wherein at least one doctor (38) is arranged at the outer contour of the core element (30), which scrapes at the inner surface of the filter wall to discharge the residue.

2. Filter according to claim 1,
**characterised in,**
**that** the filter element (14) comprises openings having an aperture size between 10 and 400 micrometers, wherein the total surface provided by the openings corresponds 1,5-times to 2,5-times, in particular twice, of the cross section of the inlet.

3. Filter according to claim 1 or 2,
**characterised in,**
**that** the inner surface of the filter wall is treated with a machining technique and is thus seamless, wherein the openings are inserted into the filter wall with a drilling process, in particular mechanically or with laser radiation.

4. Filter according to claim 1,
**characterised in,**
**that** the core element (30) is provided with a drive, which allows a rotation of the core element in a forward and rearward direction, wherein the speed of rotation is adjustable dependent on a pressure difference, in particular the pressure difference between inlet (16) and outlet (20).

5. Filter according to one of the preceding claims,
**characterised in,**
**that** the core element (30) is formed by a cylinder preferably manufactured of plastic, which wall carries doctor blades (38), wherein the doctor blades (38) charges the inner surface with a scraping outer edge.

6. Filter according to claim 5,
**characterised in,**
**that** the doctor blades (38) are held angular against the circumferential direction in the wall, wherein the doctor blades (38) are held for fastening floatingly in a slit (2) formed in the wall.

7. Filter according to claim 6,
**characterised in,**
**that** a flushing channel (3) is provided in the core element (30) for conducting flushing liquid, wherein the flushing channel (3) comprises diverging outflow channels (4), which end in the slit (2).

8. Filter according to claim 7,
**characterised in,**
**that** the outflow channels (4) having a rectangular cross section, which width corresponds to the width of the slit (2).

9. Use of the filter according to any of the preceding claims, as rework-filter, which retains granular ingredients added to the product as residue and thus makes the product reusable.

## Revendications

1. Filtre destiné à être utilisé dans la transformation d'aliments pâteux, en particulier dans la fabrication de fromages fondus, comportant un boîtier fermé (12) avec une arrivée (16) pour le produit à filtrer, une évacuation (20) pour le produit filtré, une sortie pour les résidus filtrés, ainsi qu'un insert de filtre (14) agencé entre l'arrivée (16) et l'évacuation (20), avec une paroi filtrante cylindrique, qui est traversée par le produit dans la direction radiale, de l'intérieur vers l'extérieur,
**caractérisé par**
un élément de noyau rotatif (30) agencé de façon coaxiale dans l'insert de filtre (14), dans lequel un espace annulaire (36) est défini entre l'élément de noyau (30) et la paroi filtrante, dans lequel l'élément de noyau (30) est dimensionné de telle manière, que l'espace annulaire (36) ainsi produit permet un flux constant de produit, dans lequel au moins un racloir (38) raclant la surface intérieure de la paroi filtrante, pendant la rotation de l'élément de noyau (30), est agencé sur le pourtour extérieur de l'élément de noyau (30), pour évacuer les résidus.

2. Filtre selon la revendication 1,
**caractérisé en ce que** l'insert de filtre (14) comporte des ouvertures avec une largeur de maille comprise entre 10 et 400 micromètres, dans lequel la surface totale formée par les ouvertures mesure entre 1,5 fois et 2,5 fois la section transversale de l'arrivée, en particulier environ le double.

3. Filtre selon la revendication 1 ou 2,
**caractérisé en ce que** la surface intérieure de la paroi filtrante est traitée à l'aide d'un procédé d'enlèvement de copeaux, et donc sans soudure, dans lequel les ouvertures sont intégrées dans la paroi filtrante par un procédé de perçage, en particulier de façon mécanique ou au rayon laser.

4. Filtre selon la revendication 1,
**caractérisé en ce que** l'élément de noyau (30) est équipé d'un entraînement permettant une rotation de l'élément de noyau vers l'avant et vers l'arrière, dans lequel le nombre de tours peut être réglé en fonction de la différence de pression, en particulier la différence de pression entre l'arrivée (16) et l'évacuation (20).

5. Filtre selon l'une des revendications précédentes,
**caractérisé en ce que** l'élément de noyau (30) est formé par un cylindre, constitué de préférence d'une matière plastique, dont la paroi porte des lamelles raclantes (38), dans lequel les lamelles raclantes (38) s'appliquent sur la paroi intérieure, avec un bord extérieur raclant.

6. Filtre selon la revendication 5,
**caractérisé en ce que** les lamelles raclantes (38) sont maintenues dans la paroi de manière à former un angle par rapport au sens du pourtour, dans lequel les lamelles raclantes (38) sont maintenues flottantes, pour le maintien dans une fente (2) intégrée dans la paroi.

7. Filtre selon la revendication 6,
**caractérisé en ce que** un canal de rinçage (3) est prévu dans l'élément de noyau (30), pour le passage d'un liquide de rinçage, dans lequel le canal de rinçage (3) comporte des canaux d'évacuation (4) bifurquant et débouchant respectivement dans la fente (2).

8. Filtre selon la revendication 7,
**caractérisé en ce que** les canaux d'évacuation (4) présentent une section transversale rectangulaire, dont la largeur correspond à la largeur de la fente (2).

9. Utilisation du filtre selon l'une des revendications précédentes, en tant que filtre de récupération, retenant des ingrédients granuleux ajoutés au produit, sous forme de résidus, et rendant ainsi le produit réutilisable.
